# FASCICULE DE BREVET EUROPEEN

(11) **EP 4 031 335 B1**
(45) Date de publication et mention de la délivrance du brevet: **19.03.2025**
(21) Numéro de dépôt: 20765278.5
(22) Date de dépôt: 03.09.2020
(51) Int. Cl.: B25J 15/00, B25J 15/06, B25J 15/04

(54) **DISPOSITIF ET PROCÉDÉ DE CLAMPAGE D'UN EFFECTEUR SUR UNE PEAU**
VORRICHTUNG UND VERFAHREN ZUM KLEMMEN EINES EFFEKTORS AUF EINE HAUT
DEVICE AND METHOD FOR CLAMPING AN EFFECTOR ON A SKIN

(30) Priorité: 16.09.2019 FR 1910199; 27.02.2020 FR 2001944
(43) Date de publication de la demande: 27.07.2022
(73) Titulaire: Seti-Tec, 77090 Collégien (FR)
(72) Inventeur: PEREIRA, Sébastien, 2820-568 Charneca de Caparica (PT)
(74) Mandataire: Vidon Brevets & Stratégie
(86) Numéro de dépôt international: PCT/EP2020/074681
(87) Numéro de publication internationale: WO 2021/052774

(56) Documents cités:
- EP-A1- 3 369 525
- DE-A1- 102013 020 581
- JP-A- 2010 188 436
- US-A- 4 088 312
- US-A1- 2006 143 890

## Description

### Domaine de l'invention

Le domaine de l'invention est celui de l'outillage professionnel, notamment pour des applications dans le domaine aéronautique ou des domaines similaires, dans lesquels une automatisation est mise en œuvre, sur des surfaces gauches, parfois complexes.

### Art antérieur

Il est connu de monter un effecteur (outil, par exemple visseuse, perceuse, riveteuse... associé à des moyens d'entrainement motorisé) sur un support équipé de ventouses venant prendre appui sur la surface sur laquelle il faut intervenir. Ceci permet de réduire ou supprimer les efforts renvoyer vers l'effecteur et/ou un bras robot portant cet effecteur, et donc assurer dans les meilleures conditions les opérations effectuées par l'outil.

Il a notamment été proposé, dans le document de brevet EP3369525, de mettre en œuvre des modules, ou "pads", équipés d'une pluralité de ventouses. Selon ce document, l'utilisation d'une pluralité de ventouses pour chaque module est plus efficace qu'une unique ventouse, de taille supérieure, associée à chaque module. Les différentes ventouses sont des ventouses à soufflet, aptes à compenser les écarts dus à la forme gauche d'une surface d'appui, lorsque le module est approché de la surface.

Cette approche peut cependant s'avérer insuffisamment efficace. En effet, pour prendre en compte des surfaces complexes et/ou fortement incurvées, les ventouses doivent présenter des jupes à soufflet de grande dimension, avec un volume interne relativement important, dont l'efficacité peut être insuffisante.

Il y a donc un besoin d'améliorer la solidarisation, ou clampage, sur une peau, par exemple d'un aéronef, de forme gauche, notamment pour limiter ou supprimer les efforts renvoyés vers l'effecteur et/ou le bras qui le porte.

### Exposé de l'invention

Cet objectif est atteint à l'aide d'un dispositif de clampage d'un effecteur sur une peau, comprenant un support dudit effecteur et au moins un module de clampage présentant une pluralité de ventouses et des moyens de distribution d'une pression prédéterminée contrôlant lesdites ventouses.

Selon l'invention, lesdites ventouses sont mobiles en translation indépendamment les unes des autres, par rapport à un élément de structure dudit module.

Ainsi, contrairement à l'art antérieur où l'ajustement en hauteur se fait uniquement en déplaçant le module (c'est-à-dire que les ventouses se trouvent toutes à la même distance de la structure du module, les ventouses étant fixes par rapport à la structure du module), l'invention permet de placer précisément chaque ventouse à la distance souhaitée par rapport à la peau (pièce(s) devant être vissée(s), percée(s), rivetée(s)...). Toutes les ventouses sont ainsi solidarisées à la peau de la même façon et avec la même efficacité.

Il n'est donc plus nécessaire de prévoir des ventouses à soufflet, ou plus généralement des ventouses aptes à absorber des écarts de hauteur, qui doivent en conséquence autoriser une grande déformation, entrainant un clampage insuffisant dans certains cas et des défauts de rigidité axiale, dus aux soufflets.

Selon l'invention, ledit module de clampage comprend des moyens de blocage de ladite pluralité de ventouses dans une position verrouillée sur ladite peau.

Ainsi, une fois que les ventouses sont placées de façon adéquate sur la peau (par exemple une portion de fuselage d'un aéronef ou de carrosserie d'un véhicule, indépendamment les unes des autres, elles sont immobilisées en translation. Elles sont donc bloquées en position de façon efficace, à des hauteurs différentes si nécessaire.

Selon l'invention, lesdits moyens de blocage agissent simultanément sur l'ensemble des ventouses.

Ainsi, le réglage en hauteur se fait indépendamment, pour chaque ventouse, pour optimiser l'efficacité du clampage, mais leur blocage est simultané et piloté globalement.

Selon l'invention, ledit module porte une ou plusieurs pièces de blocage mobiles en translation perpendiculairement à des tiges portant lesdites ventouses, la ou lesdites pièces de blocage pouvant prendre une position de libération, dans laquelle lesdites tiges sont mobiles en translation, et une position de blocage, dans laquelle lesdites tiges sont bloquées en translation.

Selon l'invention, ladite pièce de blocage agit sur un ensemble de mors de verrouillage venant chacun en contact avec une desdites tiges, dans la position de blocage.

Ladite pièce de blocage peut par exemple présenter une règle mobile portant une pluralité de simbleaux agissant chacun sur l'un desdits mors et pilotée par deux vérins.

Pour obtenir un blocage fiable et efficace, lesdites tiges peuvent porter des stries ou des dentures venant en prise, dans ladite position de blocage, avec des stries ou dentures complémentaires formées sur lesdits mors.

Selon un mode de réalisation particulier, lesdits moyens de distribution d'une pression délivrent une même pression à chacune desdites ventouses.

Ledit module peut présenter une pluralité de canaux usinés dans ledit élément de structure.

Ceci, le cas échéant associé à une alimentation au centre du module, permet de disposer d'une distribution pneumatique simple et efficace. Les canaux ménagés dans l'élément de structure permettent également d'en réduire le poids.

Ledit élément de structure peut porter un couvercle, coiffant lesdits canaux, ou à tout le moins certains d'entre eux.

Selon un mode de réalisation particulier, lesdits moyens de distribution d'une pression assurent plusieurs fonctions, en agissant au moins sur la solidarisation desdites ventouses à ladite peau, le déplacement en translation desdites ventouses et/ou le verrouillage en position bloquée de celle-ci.

Dans un mode de réalisation, les canaux de distribution d'air comprimé pour le déplacement en translation des ventouses et leur verrouillage sont indépendants. Il y a donc deux canaux pour la translation des ventouses (sortie et rentrée des ventouses) et deux canaux pour le verrouillage (verrouillage et déverrouillage). A ces quatre canaux s'ajoute le canal du vide.

Selon un mode de réalisation particulier, chacune desdites ventouses est équipée d'un pied isostatique.

Ce pied, placé à l'intérieur de la ventouse, permet de faciliter la mise en place et le retrait de la ventouse, tout en réduisant le volume interne de celle-ci occupée par le vide.

Selon un mode de réalisation particulier, lesdites ventouses sont des ventouses dont la surface intérieure présente des picots.

Ceci permet d'augmenter les contacts, et donc l'efficacité de la ventouse.

Les nombre, dimensions et distributions des ventouses peuvent être adaptés en fonction des mises en œuvre. Chacun desdits modules peut notamment porter entre 8 et 18 ventouses, par exemple réparties en deux ou trois rangées.

Selon un mode de réalisation particulier, lesdits modules sont amovibles, de façon à pouvoir être séparés dudit support et remplacés par d'autres modules à ventouses ou d'autres moyens de clampage.

Selon un mode de réalisation particulier, ledit support présente une forme générale en C ou en U.

Ceci peut permettre une bonne accessibilité aux zones sur lesquelles l'effecteur doit intervenir.

L'invention concerne également un procédé de clampage d'un effecteur sur une peau, selon la revendication 13.

Un tel procédé comprend notamment une étape de déplacement indépendant desdites ventouses, par rapport à un élément de structure dudit module.

Ainsi, ce n'est pas, ou pas uniquement, le module qui est déplacé, mais chacune des ventouses de celui-ci, indépendamment, pour être placée à la hauteur adéquate par rapport à l'élément de structure, de façon à être toute accostée, ou amenée en contact, avec la peau à traiter de la même façon, à la même distance et avec la même efficacité de clampage.

Selon l'invention, le procédé comprend une étape de blocage simultanée en translation de l'ensemble desdites ventouses.

Ainsi, lorsque les ventouses ont été placées dans la position de clampage, celles-ci sont automatiquement et simultanément immobilisées et maintenues en position, à des hauteurs différentes les unes des autres en fonction de la forme de la surface sur laquelle elles ont accostées.

Selon un mode de réalisation particulier, chaque simbleau est ou intègre un élément élastique déformable permettant une répartition d'effort sur l'ensemble des mors, ou mâchoires.

Selon un mode de réalisation particulier, le procédé comprend une étape de déclenchement de la mise sous vide desdites ventouses avant accostage de celles-ci sur ladite peau.

Ainsi, la mise en place et le clampage est plus rapide et plus efficace.

### Présentation des figures

D'autres caractéristiques et avantages de l'invention apparaîtront plus clairement à la lecture de la description suivante d'un mode de réalisation particulier, donné à titre de simple exemple illustratif et non limitatif, et des dessins annexés parmi lesquels :
[Fig 1] est une vue d'un dispositif de clampage selon l'invention, portant un effecteur ;
[Fig 2] illustre schématiquement un module de clampage du dispositif de la figure 1, vu en perspective ;
[Fig 3] illustre schématiquement le module de clampage de la figure 2, vu de dessus ;
[Fig 4] illustre schématiquement le module de clampage de la figure 2, vu de dessous ;
[Fig 5] illustre schématiquement le module de clampage de la figure 2, vu de côté, dans sa longueur ;
[Fig 6] illustre schématiquement le module de clampage de la figure 2, vu de côté, dans sa largeur ;
[Fig 7] illustre un exemple de mise en place des différentes ventouses sur une peau non plane ;
[Fig 8] est un organigramme simplifié d'un procédé selon l'invention ;
[Fig 9] illustre schématiquement le module de clampage de la figure 2, en coupe selon un plan transversal, les ventouses étant dans une position partiellement sortie ;
[Fig 10] illustre schématiquement le module de clampage de la figure 2, en coupe selon un plan transversal, les ventouses étant dans une position totalement rentrée ;
[Fig 11] illustre schématiquement le module de clampage de la figure 2, en coupe selon un plan longitudinal, les ventouses étant dans une position partiellement sortie ;

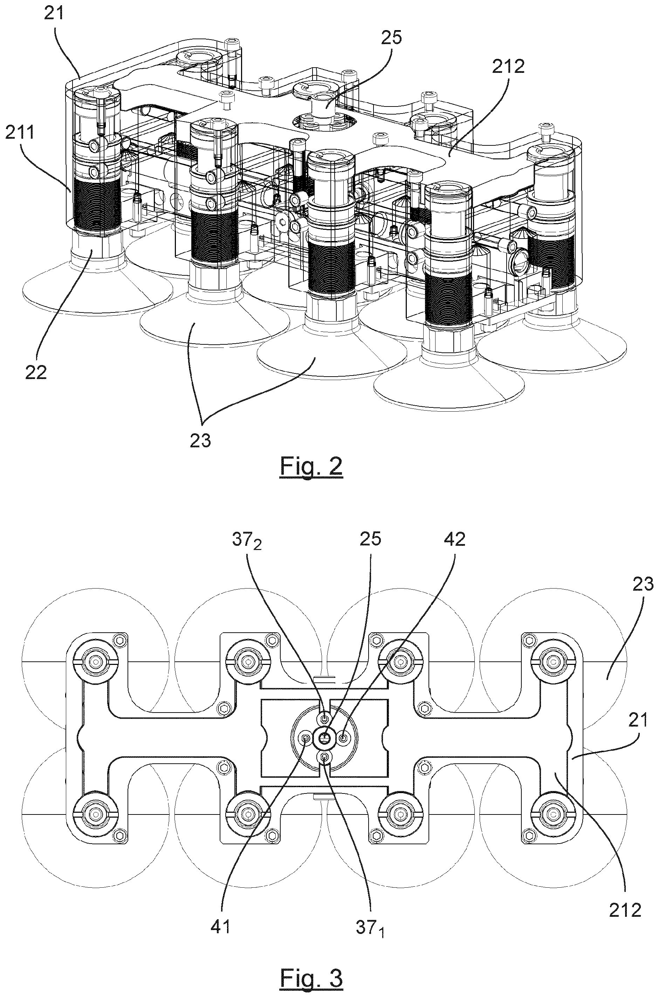

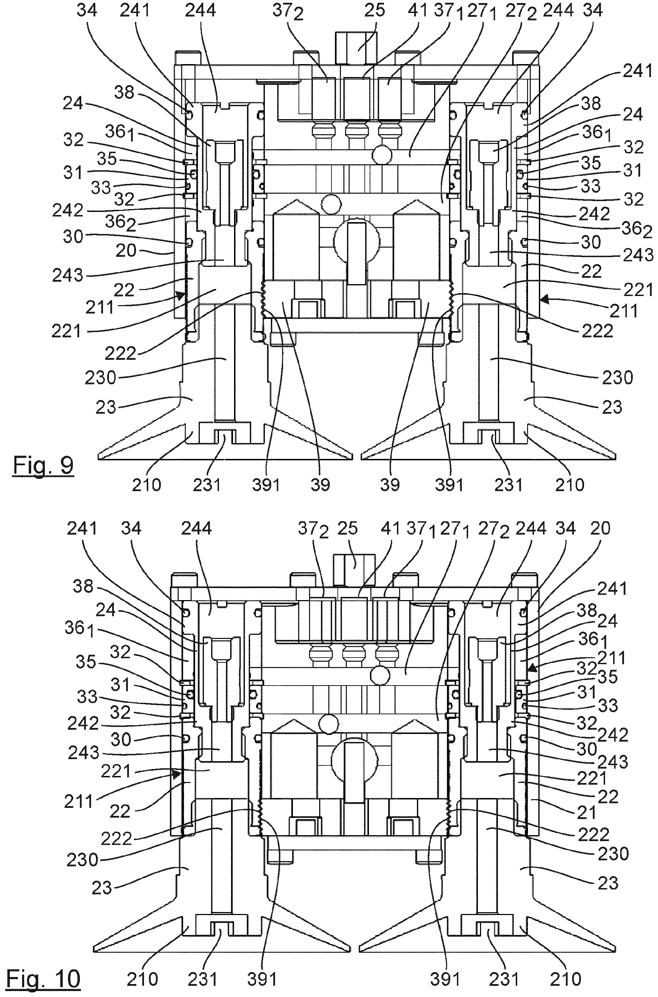

[Fig 9] illustre schématiquement le module de clampage de la figure 2, en vue partielle de dessous.

### Description détaillée d'un mode de réalisation

L'invention concerne donc une nouvelle approche du clampage d'un effecteur sur une peau, par exemple un élément d'un aéronef. L'effecteur peut notamment être une visseuse, une perceuse, une riveteuse, ou tout autre outil utile. Dans un mode de réalisation, il peut s'agir d'un ensemble multi-outil, l'outil nécessaire étant connecté en fonction des besoins à des moyens d'entrainement (motorisation).

Les outils peuvent par exemple être montés sur un carrousel, permettant leur sélection à la demande.

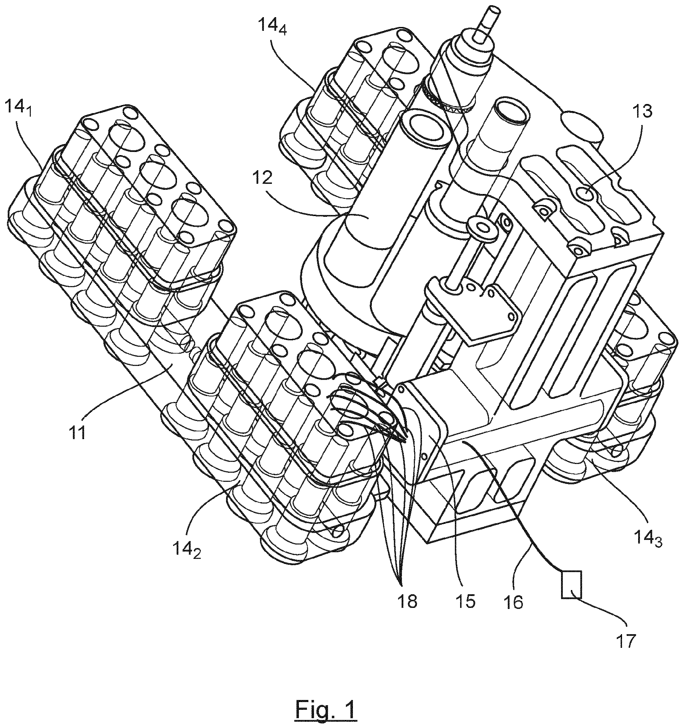

L'effecteur peut être déplacé sur la peau par un opérateur, ou de façon automatisée, à l'aide de moyens adaptés. Dans le mode de réalisation de la figure 1, il est adapté pour être monté à l'extrémité d'un bras robot. Dans ce cas en particulier, il est important que la reprise d'efforts assurés par les moyens de clampage soit la plus efficace possible, pour éviter toute interaction nocive avec le positionnement du bras robot.

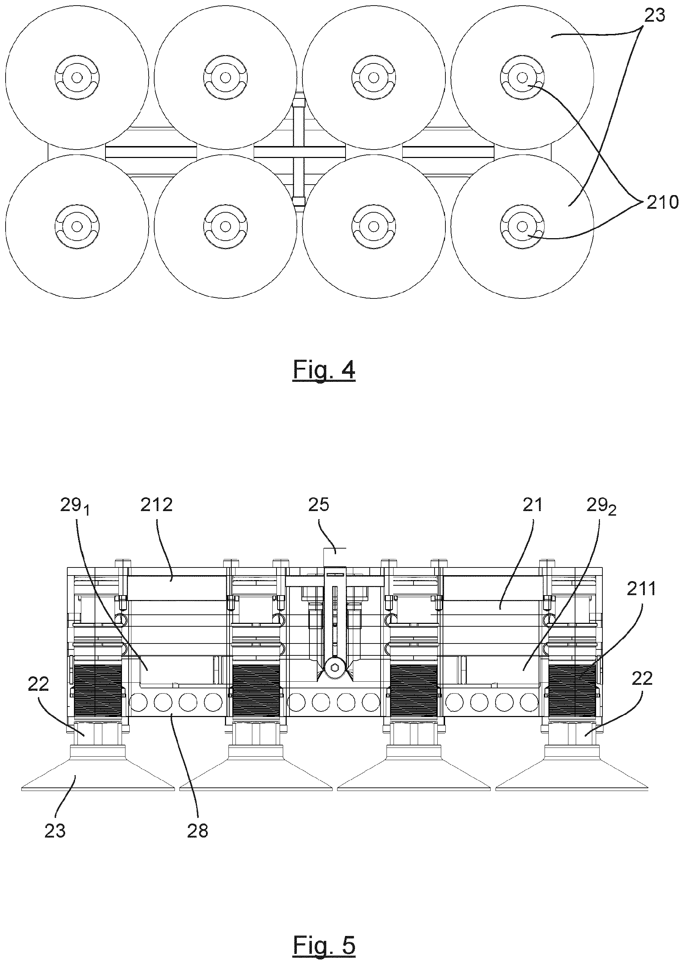

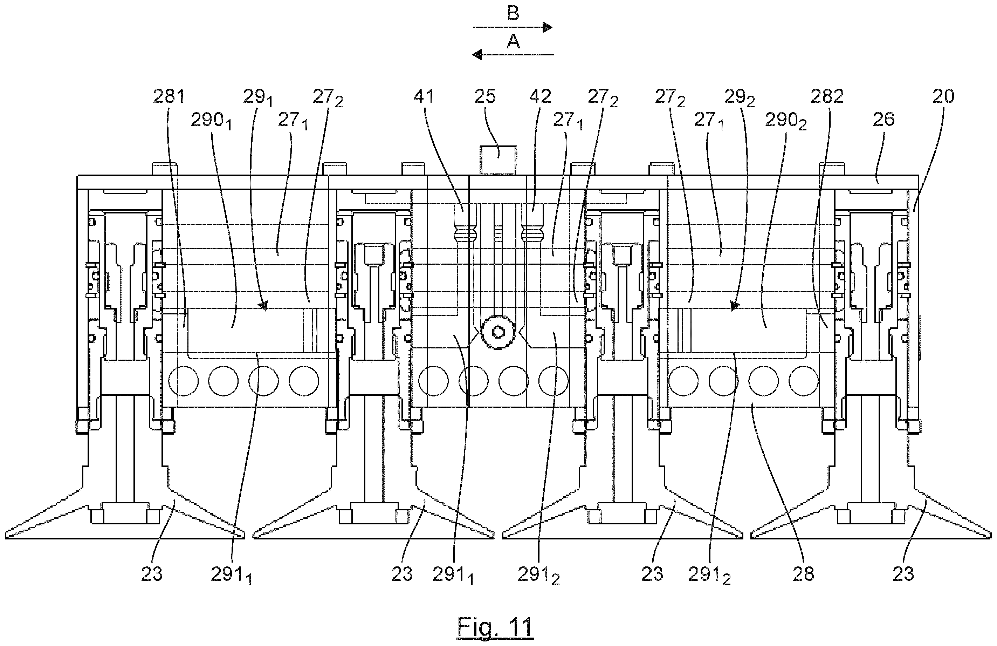

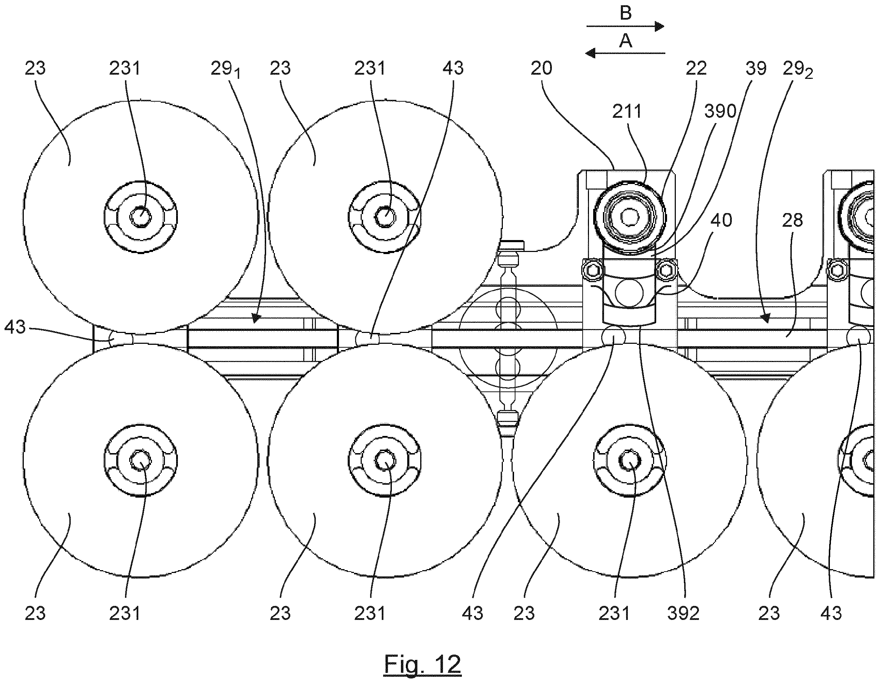

On présente en relation avec les figures 1 à 12, un exemple d'un dispositif selon l'invention.

La figure 1 illustre ainsi un dispositif de clampage selon l'invention. Il présente un support 11, qui présente ici une forme générale en U, ou en C, permettant une accessibilité optimisée à certaines zones. Ce support porte un effecteur 12 et un élément de fixation 13 à un bras robot externe (non représenté).

Dans des variantes, le support 11 peut-être solidarisé de manière réversible à un bâti portant l'effecteur 12 et l'élément de fixation 13 à un bras robot externe. Plusieurs supports de formes différentes (U, carré, rectangle, rond...) pourront alors être solidarisés de manière alternative en fonction des besoins.

Dans des variantes, l'effecteur peut par exemple être monté à l'extrémité d'un bras monté sur le support lui-même, et le dispositif de clampage peut être mobile et/ou déplacé par tout moyen adéquat.

Il est, dans le mode de réalisation décrit, équipé de quatre modules de clampage 14₁ à 14₄, portant chacun huit ventouses. Le nombre de modules et le nombre de ventouses par module, ainsi que la disposition de ces ventouses sur le module, peuvent bien sûr varier, selon les applications et les mises en œuvre.

Le dispositif de clampage comprend des moyens de distribution d'une pression 15. Ces moyens de distribution sont prévus pour être reliés via une ou plusieurs conduites 16 à un réseau de mise sous pression et de mise sous vide 17 comprenant par exemple un compresseur et une pompe à vide ou tout autre équipement permettant de générer une pression positive et une pression négative alternativement ou simultanément.

Comme il sera décrit plus en détail par la suite, ces moyens de génération d'une pression permettent dans ce mode de réalisation de générer :
- une pression de rapprochement des ventouses ;
- une pression d'éloignement des ventouses ;
- une pression de blocage des ventouses ;
- une pression de déblocage des ventouses ;
- une pression de clampage des ventouses (vide).

Ces pressions, au moins la pression de rapprochement des ventouses, sont prédéterminées. Leur valeur pourra être ajustées en fonction des besoins au moyens de moyens de régulation comme un ou plusieurs régulateurs.

Chacune de ces cinq pressions ont de préférence des valeurs identiques dans chacune des ventouses.

Ces moyens de génération d'une pression sont reliés à chaque module au moyen d'une pluralité de conduites 18. Dans cet exemple, le nombre de ces conduites 18 est égale à cinq, chaque conduite permettant de délivrer l'une des pressions mentionnées ci-dessus.

Les figures 2 à 6 illustrent de façon plus détaillée un exemple de module de clampage selon l'invention.

Le module comprend un élément de structure 21, présentant notamment huit fûts 211 dans lesquels sont mobiles en translation des arbres 22 (encore appelés tiges), portant à leur extrémité inférieure des ventouses 23.

Ces ventouses 23 sont réalisées dans un matériau souple adapté pour assurer un clampage efficace. Elles peuvent présenter, sur leur face intérieure, des picots permettant d'augmenter la surface de la peau. Plus précisément, la paroi de la ventouse soumise au vide est munie de picots qui évitent à ladite surface de venir en contact direct avec la peau de l'avion. Ainsi, le vide s'installe sur toute la surface de la ventouse et l'effort de maintien de la ventouse est égale à sa surface multipliée par la différence de pression entre la pression atmosphérique et le vide. En l'absence de tels picots, la surface soumise au vide se limiterait à la partie centrale de la ventouse et la force de maintien serait plus faible.

Selon différents modes de réalisation, la ventouse peut être fixe par rapport à l'arbre, ou mobile, par exemple via une rotule.

Le déplacement des ventouses, leur clampage sur la peau et le blocage en position de celles-ci sont assurés de façon pneumatique.

### Déplacement des ventouses

Chaque arbre 22 est monté coulissant dans le fût 211 correspondant. L'étanchéité entre le contour périphérique extérieur d'un arbre 22 et le contour périphérique intérieur du fût 211 correspondant est assurée ici au moyen d'un joint torique 30. Chaque arbre 22 est prolongé, à son extrémité opposée à celle à laquelle est fixée la ventouse 23, par une portion d'arbre 24. Dans des variantes, la portion d'arbre et l'arbre pourraient également ne former qu'une seule pièce.

Chaque fût 211 loge un anneau 31. L'anneau 31 est ici solidarisé à l'élément de structure 21 au moyen de deux circlips 32 disposés de part et d'autre de l'anneau 31 et venant se loger dans des rainures périphériques ménagées à cet effet dans le fût 211. L'étanchéité entre le contour périphérique extérieur de l'anneau 31 et le contour périphérique intérieur du fût 211 est assurée au moyen d'un joint torique 33.

La portion d'arbre 24 présente une portion de fort diamètre 241 montée coulissante dans le fût 211. L'étanchéité entre le contour périphérique extérieur de la portion d'arbre 24 et le contour périphérique intérieur du fût 211 correspondant est assurée ici au moyen d'un joint torique 34.

La portion d'arbre 24 présente une portion de faible diamètre 242 montée coulissante à l'intérieur de l'anneau 31. L'étanchéité entre le contour périphérique extérieur de la portion de faible diamètre 242 et le contour périphérique intérieur de l'anneau 31 est assurée ici au moyen d'un joint torique 35.

L'anneau 31 délimite avec l'arbre 22 et la portion de fort diamètre 241 deux chambres 36₁, 36₂ respectivement dite d'éloignement et de rapprochement. L'arbre 22 et la portion de fort diamètre 241 forment des pistons mobiles en translation à l'intérieur du fût 211 correspondant.

Un connecteur d'éloignement 37₁ débouche dans un réseau de conduits 27₁ qui conduisent chacun dans une chambre 36₁ d'éloignement.

Un connecteur de rapprochement 37₂ débouche dans un réseau de conduits 27₂ qui conduisent chacun dans une chambre 36₂ de rapprochement.

Les connecteurs sont reliés aux moyens de distribution d'une pression 15 via les conduites 18.

Les deux chambres 36₁, 36₂ de chaque fût 211 peuvent recevoir sélectivement la pression, via les conduits 27₁ et 27₂, pour contrôler le déplacement des arbres 22 dans l'un ou l'autre des sens (par exemple vers le haut ou vers le bas), en fonction de l'ouverture ou de la fermeture de clapets pilotés en conséquence, afin d'éloigner ou de rapprocher les ventouses 23 de la peau.

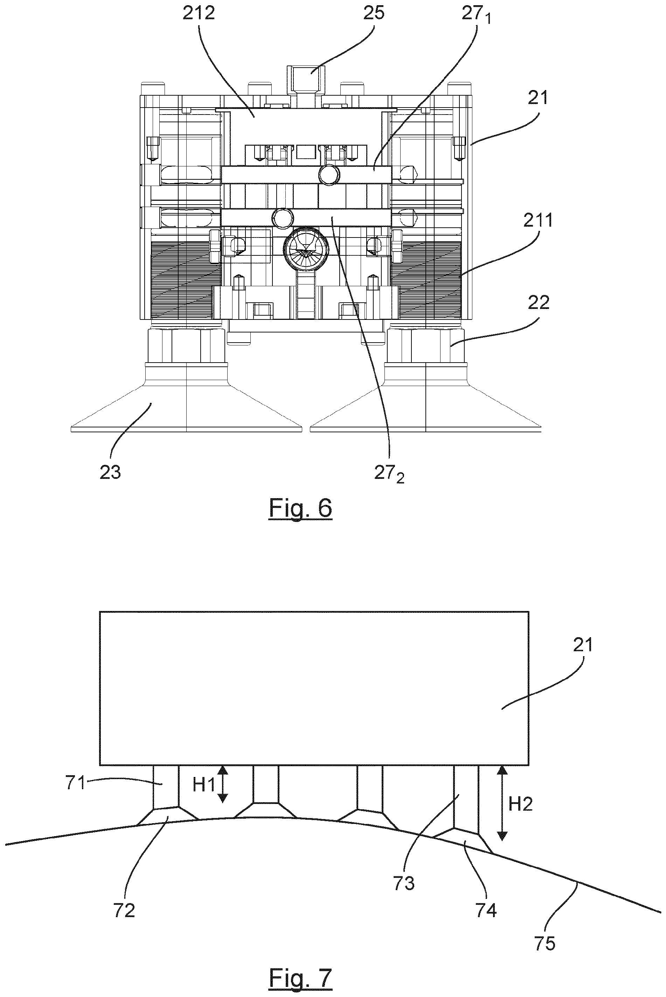

Ceci permet notamment, pendant la phase d'installation, de déplacer les ventouses de façon indépendante : sous l'effet de l'injection d'un fluide sous pression (pression de rapprochement) comme de l'air comprimé dans les canaux 27₂ via le connecteur de rapprochement 37₂, le fluide pénètre simultanément les chambres 36₂ de rapprochement induisant un déplacement des arbres 22 en direction de la peau si bien que les ventouses 23 sont déplacées jusqu'à venir en contact avec la peau, quelle que soit la forme de celle-ci. Par exemple, comme illustré sur la figure 7, l'arbre 71 portant la ventouse 72 est descendu moins bas que l'arbre 73 portant la ventouse 74, par rapport à l'élément de structure 21 du module. Ainsi, toutes les ventouses sont placées à la même distance de la peau 75, si bien qu'elles sont ultérieurement clampées sur celle-ci de façon efficace, et avec la même efficacité.

Les ventouses sont ainsi déplacées simultanément jusqu'à ce que la ventouse qui avait le moins de distance à parcourir pour entrer en contact avec la peau vienne au contact de la peau. Puis les autres ventouses continuent de se déplacer vers la peau jusqu'à ce qu'elles viennent respectivement en contact avec celle-ci. Les hauteurs H1 et H2 de déploiement des arbres, c'est-à-dire les distances entre l'élément de structure et la ventouse correspondante sont variables.

Sous l'effet de l'injection d'un fluide sous pression (pression d'éloignement) comme de l'air comprimé dans les canaux 27₁ via le connecteur de d'éloignement 37₁, le fluide pénètre simultanément les chambres 36₁ d'éloignement induisant un déplacement des arbres 22 en direction du support si bien que les ventouses 23 sont éloignées la peau.

La pression de fluide injecter pour assurer le déplacement des ventouses sera prédéterminée pour le rapprochement et éventuellement pour l'éloignement.

### Vide dans les ventouses

Dans le mode de réalisation illustré, le vide est délivré au module de façon centrale, par le connecteur 25 encore appelé connecteur de mise sous vide. Le connecteur 25 est relié aux moyens de distribution d'une pression 15 via une conduite 18.

Un réseau de canaux 212 est formé en partie supérieure du module pour amener le vide dans l'ensemble du module. Ce réseau est en communication fluidique avec chaque fût 211 et est fermé de façon hermétique par un couvercle 26, maintenu par des vis.

Chaque ventouse 23 est en communication fluidique avec le réseau de canaux 212 au moyen d'un conduit central qui s'étend à travers la ventouse 23 (portion de conduit 230), l'arbre 22 (portion de conduit 221), la portion d'arbre 24 (portion de conduit 243 et alésage 244) et la partie du fût 211 correspondant opposée à la ventouse 23. Ce conduit central débouche d'une part à l'intérieur de la ventouse 23 au moyen d'un orifice 231 et d'autre part dans le réseau de canaux 212 via l'extrémité opposée du fût 211.

Une fois en position, les ventouses sont clampées sur la peau, à l'aide du vide disponible dans le module. Pour cela, le vide est créé dans le réseau 212. Le vide se repend alors dans ce réseau 212, dans les canaux centraux et dans les ventouses 23.

Selon une approche particulière, la mise sous vide peut être déclenchée avant l'accostage des ventouses sur la peau.

Les ventouses sont munies d'un clapet 38 qui empêche l'air ambiant d'être aspiré par le vide jusqu'au moment où la périphérie de la ventouse vient en contact avec la peau de l'avion. A ce moment le vide s'établit dans la ventouse et contribue ainsi à plaquer la ventouse sur la peau. Ceci permet de limiter l'effort de placage fournit par le robot.

Un tel clapet 38 est connu en soit et n'est pas décrit plus en détail ici. Selon l'invention, il est de manière originale implanté à l'intérieur de la portion d'arbre 24 dans l'alésage 244 si bien qu'il constitue une partie du canal central correspondant.

### Blocage des ventouses

Une fois ce clampage effectué, il est souhaitable de verrouiller, ou bloquer, les ventouses en position. Ceci est, selon le mode de réalisation illustré, réalisé de façon simultanée pour toutes les ventouses. Ainsi, la mise en place des ventouses est effectuée indépendamment pour chaque ventouse, permettant d'adapter les hauteurs de déploiement des arbres, mais le blocage définitif est réalisé sur toutes les ventouses en une unique opération.

Ce blocage est ici réalisé à l'aide de mors 39 mobiles en translation perpendiculairement aux arbres 22 et à la longueur du module. Chaque mors 39 (un pour chaque arbre) présente une surface de contact 390 complémentaire de la portion de surface de l'arbre 22 contre lequel il entre en contact, pour prendre une position de blocage. Il est éloigné de l'arbre 22 pour prendre une position de libération, permettant une translation de l'arbre. Des moyens de rappel peuvent être prévus, pour faciliter le retour dans la position de libération. Il peut par exemple s'agir de ressort à lame 40 ou de tout autre élément équivalent adapté (ressort de compression, de traction, à spirale, bloc élastomère...).

Selon un mode de réalisation, les surfaces de contact complémentaires du mors et de l'arbre présentent des dentures ou des stries 391, 222, venant en prise pour garantir une immobilisation forte. Elles sont préférentiellement sensiblement orthogonales à la direction de coulissement des arbre 22. Ces stries peuvent par exemple être réalisées sous la forme d'un filetage.

Le passage de la position de libération à la position de blocage, et inversement, est assuré par une pièce de blocage comme une règle 28, mobile en translation selon la longueur du module.

Deux vérins 29₁ et 29₂ assurent le coulissement de cette règle 28. Le vérin 29₁ comprend un piston 290₁ monté mobile en translation à l'intérieur d'une chambre 291₁. La chambre 291₁ est en communication fluidique avec un canal 292₁ relié à un connecteur 41. Le vérin 29₂ comprend un piston 290₂ monté mobile en translation à l'intérieur d'une chambre 291₂. La chambre 291₂ est en communication fluidique avec un canal 292₂ relié à un connecteur 42.

Les connecteurs 41 et 42 sont reliés via des conduites 18 aux moyens de distribution d'une pression.

Le piston 290₁ est en contact avec l'une extrémité 281 de la règle 28 alors que le 290₂ est en contact avec l'autre extrémité 282 de la règle 28.

La règle 28 porte des simbleaux préférentiellement élastiques 43, agissant sur les mors de blocage 39. Plus précisément, chaque mors 39 présente une surface définissant une came 392 contre laquelle le simbleau correspondant est susceptible de venir en contact.

Les simbleaux sont conçus pour être capables de supporter les efforts à appliquer sur les mors (flexion) et le glissement.

Un simbleau peut en lui-même présenter un caractère élastique. De manière alternative ou complémentaire, un élément élastique (non représenté) peut être placé à l'interface entre un simbleau et le mors correspondant.

Les simbleaux sont préférentiellement en acier ou équivalent.

Le caractère élastique des simbleaux permet d'obtenir une répartition des efforts sur les huit mâchoires (mors) compte tenu de l'unicité de la source d'effort fourni par la règle. Leur caractère élastique permet également d'agir sur l'ensemble des mors à partir d'une unique règle en compensant les différences dimensionnelles éventuelles entre les différents mors.

Pour déplacer les mors dans leur position de libération, le vérin 29₁ est alimenté en fluide (par exemple de l'air comprimé) via le connecteur 41 et le canal 291₁ si bien que le piston 290₁ se translate à l'intérieur de la chambre 291₂ selon la flèche A. La règle 28 est alors entrainée par le piston 290₁ selon la flèche A. Le vérin 29₂ n'est pas alimenté si bien que le piston 290₂ est librement entrainé en translation dans la chambre 291₂ par la règle 28.

Dans la position de libération, les simbleaux 43 ne sont pas en contact avec les mors 39, ou sont à tout le moins en contact avec la partie de la surface de leur came 391 induisant que les mors 39 sont éloignés des arbres, notamment sous l'effet des moyens de rappel 40.

Pour déplacer les mors dans leur position de blocage, le vérin 29₂ est alimenté en fluide (par exemple de l'air comprimé) via le connecteur 42 et le canal 291₂ si bien que le piston 290₂ se translate à l'intérieur de la chambre 291₂ selon la flèche B. La règle 28 est alors entrainée par le piston 290₂ selon la flèche B. Le vérin 29₁ n'est pas alimenté si bien que le piston 290₁ est librement entrainé en translation dans la chambre 291₁ par la règle 28.

Dans la position de blocage, les simbleaux 43 poussent les mors 39 en agissant sur la surface de leur came pour qu'ils viennent en prise avec les arbres 22 et les immobilisent en translation.

Dans ce mode de réalisation, chaque ventouse 23 est associée à un pied 210 intégré dans celle-ci. Ce pied est isostatique, et s'étend au centre de la ventouse. Ceci permet de limiter l'effort par pied, par rapport à une solution prévoyant un pied unique par module. Ce pied central permet à chaque ventouse de reprendre un effort axial.

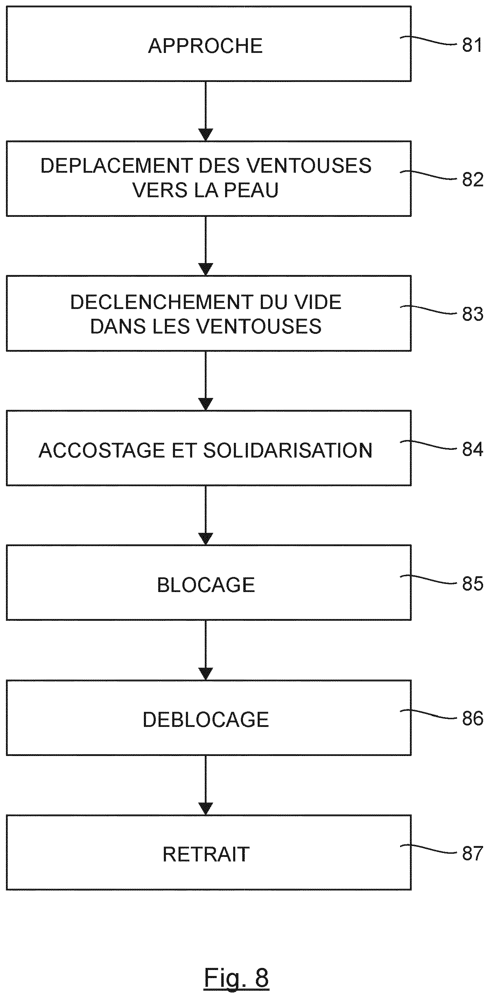

Un exemple de procédé de mise en œuvre de l'invention est illustré, de façon simplifiée, en figure 8.

Le dispositif de clampage est tout d'abord approché, dans une étape 81 d'approche à proximité de la peau, à l'aide de tout moyen adéquat, tel qu'un bras, un bras robot, voire manuellement. Cette étape peut être décomposée en une étape d'approche du dispositif puis une étape d'approche de chaque module, par rapport au dispositif.

Chaque ventouse est ensuite déplacée (étape 82), depuis l'élément de structure vers la peau. Comme décrit précédemment, le déplacement de chaque ventouse est indépendant, et variable en fonction de la distance particulière entre le module et la peau, au niveau de chaque ventouse.

Selon un mode de réalisation particulier, le vide dans chaque ventouse est déclenché (étape 83) avant l'accostage, de façon anticipée. Ainsi, l'accostage des ventouses est finalisé par l'effort d'aspiration ce qui permet de réduire la force exercée par chaque arbre 22 pour faire accoster les ventouses et ainsi d'éviter de dérégler la position du bras robot. Le vide peut toutefois alternativement être créé dans les ventouses après qu'elles accostent la peau.

L'accostage et la solidarisation (clampage) de la ventouse à la peau sont finalisés (étape 84), puis les ventouses sont bloquées en position (étape 85), par exemple de façon simultanée, comme décrit précédemment.

La ou les opérations devant être effectuées sont alors réalisées par l'effecteur. Lorsque celles-ci sont terminées, les arbres des ventouses sont libérés, ou débloqués (étape 86), et les ventouses sont retirées de la peau après avoir stoppé le vide, et ramenées dans une position de repos à proximité de l'élément de structure du module en les éloignant de la peau.

Il est alors possible de déplacer le dispositif de clampage, et l'effecteur qu'il porte, vers un autre emplacement de travail.

## Revendications

1. Dispositif de clampage d'un effecteur (12) sur une peau (75), comprenant un support (11) dudit effecteur (12) et au moins un module de clampage (14₁-14₂) présentant une pluralité de ventouses (23) et des moyens de distribution d'une pression (15) prédéterminée contrôlant lesdites ventouses (23), **caractérisé en ce que** lesdites ventouses (23) sont mobiles en translation, suivant leur axe longitudinal, indépendamment les unes des autres, par rapport à un élément de structure (21) dudit module (14₁-14₂),
**en ce que** ledit module de clampage (14₁-14₂) comprend des moyens de blocage (39, 28) de ladite pluralité de ventouses (23) dans une position verrouillée sur ladite peau (75), lesdits moyens de blocage (39, 28) agissent simultanément sur l'ensemble des ventouses (23),
ledit module (14₁-14₂) portant une ou plusieurs pièces de blocage (28) mobiles en translation perpendiculairement à des tiges (22) portant lesdites ventouses (23), la ou lesdites pièces de blocage (28) pouvant prendre une position de libération, dans laquelle lesdites tiges (22) sont mobiles en translation, et une position de blocage, dans laquelle lesdites tiges (22) sont bloquées en translation,
ladite pièce de blocage (28) agit sur un ensemble de mors de verrouillage (39) venant chacun en contact avec une desdites tiges (22), dans la position de blocage.

2. Dispositif selon la revendication 1, **caractérisé en ce que** ladite pièce de blocage présente une règle (28) mobile portant une pluralité de simbleaux (43) agissant chacune sur l'un desdits mors (39) et pilotée par deux vérins (29₁, 29₂).

3. Dispositif selon la revendication 1 ou 2, lesdites tiges (22) portent des stries ou des dentures (222) venant en prise, dans ladite position de blocage, avec des stries ou des dentures (391) complémentaires formées sur lesdits mors (39).

4. Dispositif selon l'une quelconque des revendications 1 à 3, **caractérisé en ce que** lesdits moyens de distribution d'une pression (15) délivrent une même pression à chacune desdites ventouses (23).

5. Dispositif selon la revendication 4, **caractérisé en ce que** ledit au moins un module (14₁-14₂) présente une pluralité de canaux (27₁, 27₂, 212) usinés dans ledit élément de structure (21).

6. Dispositif selon la revendication 5, **caractérisé en ce que** ledit élément de structure (21) porte un couvercle (26), coiffant au moins certains desdits canaux (27₁, 27₂, 212).

7. Dispositif selon l'une quelconque des revendications 1à 6, **caractérisé en ce que** lesdits moyens de distribution d'une pression (15) agissent sur la solidarisation desdites ventouses (23) à ladite peau (75), le déplacement en translation desdites ventouses (23) et/ou le verrouillage en position bloquée de celle-ci.

8. Dispositif selon l'une quelconque des revendications 1 à 7, **caractérisé en ce que** chacune desdites ventouses (23) est équipée d'un pied isostatique (210).

9. Dispositif selon l'une quelconque des revendications 1à 8, **caractérisé en ce que** lesdites ventouses (23) sont des ventouses dont la surface intérieure présente des picots.

10. Dispositif selon l'une quelconque des revendications 1 à 9, **caractérisé en ce que** ledit au moins un module (14₁-14₂) porte entre 8 et 18 ventouses (23).

11. Dispositif selon l'une quelconque des revendications 1 à 10, **caractérisé en ce que** ledit au moins un module (14₁-14₂) est amovible, de façon à pouvoir être séparé dudit support (11) et remplacé par d'autres modules à ventouses (14₁-14₂) ou d'autres moyens de clampage.

12. Dispositif selon l'une quelconque des revendications 1 à 11, **caractérisé en ce que** ledit support (11) présente une forme générale en C ou en U.

13. Procédé de clampage d'un effecteur (12) sur une peau (75), ledit effecteur (12) étant monté sur le support (11) d'un dispositif de clampage selon l'une quelconque des revendications 1 à 12,
**caractérisé en ce qu'**il comprend une étape (82) de déplacement indépendant desdites ventouses (23), par rapport à un élément de structure (21) dudit module (14₁-14₂),
et **en ce qu'**il comprend une étape (85) de blocage simultanée en translation de l'ensemble desdites ventouses (23).

14. Procédé de clampage selon la revendication 13, **caractérisé en ce qu'**il comprend une étape (83) de déclenchement de la mise sous vide desdites ventouses (23) avant accostage de celles-ci sur ladite peau (75).

## Patentansprüche

1. Vorrichtung zum Festklemmen eines Effektors (12) an einer Haut (75), umfassend einen Träger (11) des Effektors (12) und mindestens ein Klemmmodul (14₁-14₂), das eine Vielzahl von Saugnäpfen (23) und Mittel (15) zur Verteilung eines vorbestimmten Drucks, der die Saugnäpfe (23) steuert, aufweist, **dadurch gekennzeichnet, dass** die Saugnäpfe (23) entlang ihrer Längsachse unabhängig voneinander in Bezug auf ein Strukturelement (21) des Moduls (14₁-14₂) translatorisch beweglich sind,
dass das Klemmmodul (14₁-14₂) Mittel (39, 28) zum Blockieren der Vielzahl von Saugnäpfen (23) in einer Verriegelungsposition auf der Haut (75) umfasst, wobei die Mittel (39, 28) zum Blockieren gleichzeitig auf alle Saugnäpfe (23) wirken,
wobei das Modul (14₁-14₂) ein oder mehrere Blockierteile (28) trägt, die senkrecht zu Stäben (22), die die Saugnäpfe (23) tragen, translatorisch beweglich sind,
wobei das Blockierteil bzw. die Blockierteile (28) eine Freigabeposition, in der die Stäbe (22) translatorisch beweglich sind, und eine Blockierposition, in der die Stäbe (22) translatorisch blockiert sind, einnehmen können,
wobei das Blockierteil (28) in der Blockierposition auf eine Gruppe von Verriegelungsbacken (39) wirkt, die jeweils mit einem der Stäbe (22) in Kontakt stehen.

2. Vorrichtung nach Anspruch 1, **dadurch gekennzeichnet, dass** das Blockierteil ein bewegliches Lineal (28) aufweist, das eine Vielzahl von Druckstücken (43), die jeweils auf eine der Backen (39) wirken, trägt und durch zwei Zylinder (29₁, 29₂) gesteuert wird.

3. Vorrichtung nach Anspruch 1 oder 2, wobei die Stäbe (22) Riffelungen oder Zahnungen (222) aufweisen, die in der Blockierposition mit an den Backen (39) ausgebildeten komplementären Riffelungen oder Zahnungen (391) in Eingriff kommen.

4. Vorrichtung nach einem der Ansprüche 1 bis 3, **dadurch gekennzeichnet, dass** die Mittel (15) zur Verteilung an jeden der Saugnäpfe (23) einen gleichen Druck abgeben.

5. Vorrichtung nach Anspruch 4, **dadurch gekennzeichnet, dass** das mindestens eine Modul (14₁-14₂) eine Vielzahl von Kanälen (27₁, 27₂, 212) aufweist, die in das Strukturelement (21) eingearbeitet sind.

6. Vorrichtung nach Anspruch 5, **dadurch gekennzeichnet, dass** das Strukturelement (21) eine Abdeckung (26) trägt, die zumindest einige der Kanäle (27₁, 27₂, 212) bedeckt.

7. Vorrichtung nach einem der Ansprüche 1 bis 6, **dadurch gekennzeichnet, dass** die Mittel (15) zur Verteilung auf die feste Verbindung der Saugnäpfe (23) mit der Haut (75), die Translationsbewegung der Saugnäpfe (23) und/oder die Verriegelung derselben in der Blockierposition wirken.

8. Vorrichtung nach einem der Ansprüche 1 bis 7, **dadurch gekennzeichnet, dass** jeder der Saugnäpfe (23) mit einem isostatischen Fuß (210) ausgestattet ist.

9. Vorrichtung nach einem der Ansprüche 1 bis 8, **dadurch gekennzeichnet, dass** es sich bei den Saugnäpfen (23) um Saugnäpfe handelt, deren Innenfläche Noppen aufweist.

10. Vorrichtung nach einem der Ansprüche 1 bis 9, **dadurch gekennzeichnet, dass** das mindestens eine Modul (14₁-14₂) zwischen 8 und 18 Saugnäpfe (23) trägt.

11. Vorrichtung nach einem der Ansprüche 1 bis 10, **dadurch gekennzeichnet, dass** das mindestens eine Modul (14₁-14₂) abnehmbar ist, sodass es vom Träger (11) getrennt und durch andere Module mit Saugnapf (14₁-14₂) oder andere Klemmmittel ersetzt werden kann.

12. Vorrichtung nach einem der Ansprüche 1 bis 11, **dadurch gekennzeichnet, dass** der Träger (11) eine allgemeine C- oder U-Form aufweist.

13. Verfahren zum Festklemmen eines Effektors (12) auf einer Haut (75), wobei der Effektor (12) auf dem Träger (11) einer Vorrichtung zum Festklemmen nach einem der Ansprüche 1 bis 12 montiert ist,
**dadurch gekennzeichnet, dass** es einen Schritt (82) der unabhängigen Bewegung der Saugnäpfe (23) in Bezug auf ein Strukturelement (21) des Moduls (14₁-14₂) umfasst und dass es einen Schritt (85) der gleichzeitigen translatorischen Blockierung aller Saugnäpfe (23) umfasst.

14. Verfahren nach Anspruch 13, **dadurch gekennzeichnet, dass** es einen Schritt (83) des Auslösens des Evakuierung der Saugnäpfe (23) vor dem Andocken derselben auf der Haut (75) umfasst.

## Claims

1. Device for clamping an effector (12) on a skin (75), comprising a support (11) for said effector (12) and at least one clamping module (14₁-14₂) having a plurality of suction pads (23) and means (15) for distributing a predetermined pressure controlling said suction pads (23), **characterized in that** said suction pads (23) are able to move translationally along their longitudinal axis independently of one another with respect to a structural element (21) of said module (14₁-14₂),
**in that** said clamping module (14₁-14₂) comprises blocking means (39, 28) for blocking said plurality of suction pads (23) in a locked position on said skin (75), said blocking means (39, 28) acting simultaneously on all of the suction pads (23),
said module (14₁-14₂) carrying one or more blocking parts (28) that are able to move translationally perpendicularly to rods (22) carrying said suction pads (23), said blocking part(s) (28) being able to assume a release position, in which said rods (22) are able to move translationally, and a blocking position, in which said rods (22) are blocked against moving translationally,
said blocking part (28) acting on a set of locking jaws (39) that each come into contact with one of said rods (22) in the blocking position.

2. Device according to Claim 1, **characterized in that** said blocking part has a movable bar (23) which carries a plurality of pegs (43) each acting on one of said jaws (39) and which is controlled by two cylinders (29₁, 29₂).

3. Device according to Claim 1 or 2, said rods (22) having striations or toothings (222) engaging, in said blocking position, with complementary striations or toothings (391) formed on said jaws (39).

4. Device according to any one of Claims 1 to 3, **characterized in that** said means (15) for distributing a pressure deliver a same pressure to each of said suction pads (23).

5. Device according to Claim 4, **characterized in that** said at least one module (14₁-14₂) has a plurality of channels (27₁, 27₂, 212) machined into said structural element (21).

6. Device according to Claim 5, **characterized in that** said structural element (21) has a cover (26) that covers at least some of said channels (27₁, 27₂, 212).

7. Device according to any one of Claims 1 to 6, **characterized in that** said means (15) for distributing a pressure act on the securement of said suction pads (23) to said skin (75), the translational movement of said suction pads (23) and/or the locking in the blocking position thereof.

8. Device according to any one of Claims 1 to 7, **characterized in that** each of said suction pads (23) is equipped with an isostatic foot (210).

9. Device according to any one of Claims 1 to 8, **characterized in that** said suction pads (23) are suction pads whose inner surface has pin-like protuberances.

10. Device according to any one of Claims 1 to 9, **characterized in that** said at least one module (14₁-14₂) carries between 8 and 18 suction pads (23).

11. Device according to any one of Claims 1 to 10, **characterized in that** said at least one module (14₁-14₂) is removable so as to be able to be separated from said support (11) and replaced with other suction pad modules (14₁-14₂) or other clamping means.

12. Device according to any one of Claims 1 to 11, **characterized in that** said support (11) is generally C-shaped or U-shaped.

13. Method for clamping an effector (12) on a skin (75), said effector (12) being mounted on the support (11) of a device for clamping according to any one of Claims 1 to 12, **characterized in that** said method comprises a step (82) of independently moving said suction pads (23) with respect to a structural element (21) of said module (14₁-14₂),
and **in that** said method comprises a step (85) of simultaneously blocking all of said suction pads (23) against translational movement.

14. Method for clamping according to Claim 13, **characterized in that** it comprises a step (83) of triggering a vacuum in said suction pads (23) before they dock with said skin (75).
